# EUROPEAN PATENT SPECIFICATION

(11) **EP 1 828 324 B1**
(45) Date of publication and mention of the grant of the patent: **07.01.2009**
(21) Application number: 05816341.1
(22) Date of filing: 02.11.2005
(51) Int. Cl.: C09D 127/12

(54) **FLUOROPOLYMER COATINGS CONTAINING TELOMERS**
FLUORPOLYMERBESCHICHTUNGEN MIT TELOMEREN
REVETEMENTS FLUOROPOLYMERES CONTENANT DES TELOMERES

(30) Priority: 02.11.2004 US 624554 P
(43) Date of publication of application: 05.09.2007
(73) Proprietor: E.I. DU PONT DE NEMOURS AND COMPANY, Wilmington, DE 19898 (US)
(72) Inventor: WHELAND, Clayton, Robert, Wilmington, DE 19807 (US); KAKU, Mureo, Utsunomiya, Tochigi 320-003 (JP); KUNO, Takashi, Utsunomiya-shi, Tochigi 321-0934 (JP); USCHOLD, Ronald, Earl, West Chester, PA 19382 (US); IWATO, Satoko, Shibuya-ku, Tokyo 150-0001 (JP)
(74) Representative: Matthews, Derek Peter
(86) International application number: PCT/US2005/039950
(87) International publication number: WO 2006/050497

(56) References cited:
- US-A- 3 954 637
- US-A- 3 962 373
- US-A- 5 035 950
- US-A- 5 599 631
- US-A1- 2004 099 527

## Description

### FIELD OF INVENTION

The present invention relates to fluoropolymer coatings. The coatings contain fluorinated telomers, and are useful in providing low-reflectance layers having abrasion and scratch resistance.

### BACKGROUND

Much work has been done concerning low reflective plastics, particularly for plastic lenses, optical devices and anti-reflective film for displays. One method used is vapor disposition of oxidized metal on the surface of the plastic. However, vapor deposition generally uses a batch process and when the substrate is large, the productivity can be undesirably low. Another method is to apply a coating of fluoropolymer solution. The coating is done by a dipping process and is applicable for large substrates with high productivity. Though fluoropolymers have low reflective indexes, they also have inadequate adhesion to many plastic substrates. Improvement in the adhesion between fluoropolymers and substrate plastics has been long sought.

Combinations of fluorinated copolymers coated on various plastic and glass substrates are disclosed in US-A-5 599 631, WO2000/0055130 and WO2005/044939.

However, known fluoropolymer coatings often do not have sufficient abrasion resistance such as scratch resistance because fluoropolymer is itself soft. There is a need for coatings having relatively low reflective index and adequate adhesion. It is desirable to be able to form such coatings using fluoropolymer solutions. The present invention is directed to these, and other, important ends.

### SUMMARY OF THE INVENTION

One aspect of the present invention is a two-layer coating system for coating substrates comprising an upper layer containing a fluorinated telomer and one or more fluorinated copolymers selected from:
a. poly(TFE/HFP) wherein the molar ratio of HFP to TFE is from about 0.3 to about 1.9;
b. VF2/TFE/HFP terpolymer, wherein the molar ratio of HFP to TFE is from about 0.3 to about 1.9 and the concentration of VF2 is about 19 mole %; and
c. poly(TFE/perfluoro-2,2-dimethyldioxole) wherein the concentration of the perfluorodimethyldioxole is from about 60 to about 90 mole %;
and a lower layer comprising one or more selected from:
a. poly(VF2/TFE/HFP) wherein the ratio of TFE to HFP is from about 0.3 to about 1.9 and the concentration of VF2 is from about 18 to about 60 mole % on PMMA substrates and from about 12 to about 40 mole % on PC, PET, and PS substrates;
b. poly(VF/TFE/HFP) wherein the ratio of TFE to HFP is from about 0.9 to about 2.1 and the concentration of VF is from about 42 to about 58 mole %;
c. poly(VAc/TFE/HFIB) wherein the concentration of VAc is from to 69 mole % and the concentration of HFIB is from 14 to 52 mole %; and
d. a TFE/PVOH graft comprising about 46 mole percent TFE.

In some embodiments, the amount of telomer is up to 80% by weight.

In some embodiments, the telomer comprises tetrafluoroethylene or perfluoroalkylpolyether units. In some embodiments, the telomere has the formula (C₂F₄)ₙ or F-(CFCF₃-CF₂-O)ₙ-CF₂CF₃ wherein n is 2 to 500. In some embodiments, the telomere is endcapped.

Another aspect of the present invention is a method of increasing the hardness of a two layer coating system comprising fluorinated copolymers as defined above, comprising incorporating into the upper layer of the coating a fluorinated telomer.

A further aspect of the present invention is a method of coating a substrate, comprising:
a. providing a substrate having a surface;
b. dissolving a fluorinated copolymer in a solvent to form a product;
c. adding to the product a dispersion comprising a fluorinated telomer in a fluorinated solvent to form a mixture; and applying the mixture of step b) to the surface of the substrate to form a two layer coating system as defined above.

These and other aspects the present invention will be apparent to those skilled in the art in view of the following description and the appended claims.

### DETAILED DESCRIPTION

The present invention provides coating systems that show improved hardness as compared to conventional coatings made from fluoropolymers, and methods of preparing such coatings. The coating systems comprise fluorinated copolymers and fluorinated telomers. It has been discovered that the abrasion resistance of fluoropolymer coatings is improved by addition of a fluorinated telomer. The coatings provide an anti-reflectance (AR) coating having desirable abrasion resistance and adhesion properties without the need to apply primers or surface protection layers.

Unless otherwise stated, the following terms and abbreviations when used herein have the following meanings:
HFIB - Hexafluoroisobutylene, (CF₃)₂C=CH₂
HFP - Hexafluoropropylene, CF₂=CF-CF₃
PC - Polycarbonate
PET - Polyethyleneterephthalate
PMMA - Polymethylmethacrylate
PMVE - Perfluoromethylvinylether
PVOH - Polyvinyl alcohol
PS - Polysulfone
TAC - Triacetyl cellulose
Teflon® AF - TFE/Perfluoro-2,2-dimethyldioxole copolymer
TFE - Tetrafluoroethylene, CF₂=CF₂
VAc - Vinyl acetate, CH₃-C(O)-OCH=CH₂
VF - Vinyl fluoride, CH₂=CHF
VF2 - Vinylidene fluoride, CF₂=CH₂

By "fluorinated telomer" it is meant a low-molecular weight fluorinated polymer, preferably with a degree of polymerization of 2 to 500. Telomers can have a wide variety of degrees of polymerization such as, for example, 18 or more, up to 100, 400, or 500.

The term "fluorinated" means that at least 90% of the combined total of halogen and hydrogen atoms are fluorine atoms. In one embodiment, the polymer is perfluorinated, which means that substantially or exactly 100% of the combined total of halogen and hydrogen atoms on the backbone are fluorine atoms.

In some embodiments the fluorinated telomer is derived from polytetrafluoroethylene oligomers or perfluoroalkylpolyethers oligomers, such as those having formula (C₂F₄)ₙ or F-(CFCF₃-CF₂-O)ₙ-CF₂CF₃, excluding end-capping, where n is typically within the range of 2 to 500 but can be, for example from about 18 to 50, 100 or 200. The telomer chains can be end-capped by any group that does not significantly affect the properties of the telomer, such as H, alkyl groups and fluorinated alkyl groups. The telomers can be a mixture of two or more fluorinated telomere compositions and/or molecular weights. Such telomers are well-known and can be prepared by any known methods such as those disclosed in Ameduri, B et al, Journal of Fluorine Chemistry (2001), 107(2), 397-409 and Topics in Current Chemistry (1997), 192, Organofluorine Chemistry: Fluorinated Alkenes and Reactive Intermediates, 165-233. Telomers suitable for use in the instant invention can also contain small amounts of additives, such as , for example, silica, rust-preventive agents, molybdenum disulfide, sodium nitrite and/or graphite.

Telomers useful in the instant invention can also be obtained commercially from various sources. Examples of commercially available fluorinated telomers are those in the Krytox® perfluoroalkylpolyethers family such as Krytox® 143 and Krytox® GPL, and those in the DuPont™ DryFilm family such as DuPont™ DryFilm RA and DuPont™ DryFilm 1000, all available from E.I. DuPont de Nemours, Wilmington, DE. These Krytox® and DuPont™ Dry Film compounds are particles that are sold commercially as dispersions in a solvent.

The telomer can be dispersed in a solvent for ease of addition to the coating system. Typical solvents in which the telomer can be dispersed include, for example, isopropyl alcohol, fluorocarbons and hydrofluorocarbons such as those in the Vertrel® family of solvents, as well as mixtures thereof. Generally, the dispersion can contain about 0.01 % to 20%, and usually about 0.1 to 5% by weight of the telomer.

Applicants have discovered that adding fluorinated telomer to the coating mixture can maximize the hardness of the coating while minimizing the loss of transmittance. The amount of telomer in the coating can be any amount, preferably up to about 80% by weight, or up to about 20 % by weight, respectively. For telomers based on tetrafluoroethylene, such as those in the DryFilm family, the preferred range is from about 0.1 to about 10 wt% and more preferably from about 0.1 to about 5 wt%. For telomers based on perfluoroalkylpolyethers, such as those in the Krytox® family, the preferred range is from about 0.1 to about 80 wt% and more preferably from about 0.1 to about 50 wt%.

Substrates suitable for coating with the coating compositions disclosed herein can be any optically clear plastic or glass substrate. Preferred substrates are glass, PMMA, PC, PET, TAC and PS; more preferred are glass and PMMA. The thickness of the coating is preferably from 10 nm to 1000 nm; more preferably from 70 nm to 120 nm.

In U.S. Patent Appl. No. 20040037967 and PCT application PCT/US03/32090 (WO2005/044939) it was shown that certain combinations of fluorinated copolymers coated on various plastic and glass substrates exhibited good adhesion and low reflective index, with the coatings adhering without chemical bonding. It is believed that the coating compositions disclosed herein can provide improved improved hardness without significant loss of transmission to the coatings disclosed therein.

The invention provides a coating system comprising two layers. The telomer is contained withinin the top (outer) layer. The substrates and fluorinated telomer suitable for this coating system are as described herein. The upper layer comprises a fluorinated telomer and one or more fluorinated copolymers selected from:
a. poly(TFE/HFP) wherein the molar ratio of HFP to TFE is from about 0.3 to about 1.9;
b. VF2/TFE/HFP terpolymer, wherein the molar ratio of HFP to TFE is from about 0.3 to about 1.9 and the concentration of VF2 is about 19 mole %; and
c. poly(TFE/perfluoro-2,2-dimethyldioxole) wherein the concentration of the perfluorodimethyldioxole is from about 60 to about 90 mole %.

The lower layer comprises one or more selected from:
a. poly(VF2/TFE/HFP) wherein the ratio of TFE to HFP is from about 0.3 to about 1.9 and the concentration of VF2 is from about 18 to about 60 mole % on PMMA substrates and from about 12 to about 40 mole % on PC, PET, and PS substrates;
b. poly(VFfTFE/HFP) wherein the ratio of TFE to HFP is from about 0.9 to about 2.1 and the concentration of VF is from about 42 to about 58 mole %;
c. poly(VAc/TFE/HFIB) wherein the concentration of VAc is from to 69 mole % and the concentration of HFIB is from 14 to 52 mole %; and
d. a TFE/PVOH graft comprising about 46 mole percent TFE.

In one embodiment the two-layer coating system is used to coat PC, PET or PS, the ratio of TFE to HFP is from about 0.9 to about 1.9 in both the lower and upper layer, and the concentration of VF₂ is from about 12 to about 40 mole %.

The thickness of the upper layer can be, for example, from about 10 to about 1000 nm, from about 30 to about 120 nm, or from about 70 to about 120 nm.

The methods and compositions disclosed herein can provide increased hardness in a coating comprising a fluorinated polymer. Increased hardness is provided by incorporating into the upper layer of the coating a fluorinated telomere, as disclosed herein.

The fluorinated copolymers, substrates, and fluorinated telomer are as described above.

The invention is also directed to a method of preparing a coating on a substrate, comprising:
a. dissolving a fluorinated copolymer in a solvent to form a product;
b. adding to the product a dispersion containing a fluorinated telomer in a solvent to form a mixture; and
c. applying the mixture to the surface of the substrate to form a coating.

The fluorinated copolymers, substrates, and tetrafluoroethylene telomer are as described above. The coating system is a two layer system, also as described above. Any solvent can be used to dissolve the fluorinated copolymer and/or disperse the telomer provided that it is inert to the substrate, polymers and other solvents used. A mixture of solvents may also be used for either the copolymer or telomer. Typical solvents for both include, for example, isopropyl alcohol, fluorocarbons, hydrofluorocarbons such as those in the Vertrel® family, Novec^{™} family of solvents and ketone solvent such as methyl isobutyl ketone and methyl ethyl ketone, or the like, as well as mixtures thereof. Preferably the solvent is itself fluorinated. Generally, the dispersion will contain about 0.01% to 20% and usually about 0.1 to 5%, by weight of the telomer. Generally the fluorinated is also dissolved in a solvent at a concentration of about 0.01 % to 20% and usually about 0.1 to 5%, by weight of the copolymer.

The polymers described herein can be made using known methods. Preferably, such methods provide desirably high fluorine content, optical clarity and solution coatability known for fluorinated copolymer coatings. Suitable methods include emulsion and bulk polymerization methods as disclosed, for example, in , Encyclopedia of Polymer Science and Engineering, 1989, Vol. 16, pg 601-613 and Vol. 7, pg. 257-269, John Wiley & Sons.

### EXAMPLES

The copolymers used in the Examples below were made by polymerization at 14,000 psi and 200-400°C as disclosed in US Patent Nos. 5,478,905 and 5,637,663. The coating methods provide single layer coatings, i.e. not embodiments of the invention now claimed.

### Method of measuring transmittance

Light transmittance was measured at 500 nm using a Shimadu #UV-3100 Spectrometer. This machine measures a continuous comparison of a split beam, part of which passed through the sample.

### Method of measuring water contact angle

A drop of pure water (2 micro litters) was placed on the coated layer surface of the test specimen. With a contact angle meter (Kyowa Interfacial Science, Japan), the contact angle was measured.

### Method of measuring hardness

Hardness was measured in conformity to JIS K5400. Hardness of the coating was checked by scratching with the lead of a pencil and shown by concentration signs. 6B, 5B, 4B, 3B, 2B, B, HB, F, H, 2H, 3H, 4H, 5H, 6H, where 6B is the softest and 6H is the hardest. The test piece was turned up on a painted surface and fixed on a level stand. A pencil was held at an angle of 45 degrees, and pressed against the painted surface as strongly as possible to the extent that the lead does not break, pushed out about 1 cm with constant speed ahead of a tester to scratch the coating. The speed to push out was set to 1 cm/s. If any scratches were not found on the coating 2 times or more out of five tests, the pencil was exchanged for one with the concentration sign of a higher rank and the test was repeated until a pencil which damages the coating twice or more was found. The concentration sign recorded was one step lower than that pencil.

### Abrasion Test Method-1

The coated layer surface of the test specimen was rubbed with soft nonwoven fabric under 1 kg load. The appearance after rubbing was observed visually.

### Abrasion Test Method-2

The water contact angle was measured and the surface was observed to check the surface appearance after rubbing with steel wool under a load of 200 g/cm2 for 5 to 20 times.

### Adhesion Test Method

A tool with 10 razor blades separated by a distance of 1 mm was used to cut the coating down to the plastic substrate, drawing the razor blade tool first in one direction and then a second time in a perpendicular direction. This resulted in 100 crosshatched squares. Scotch® brand adhesive tape was applied to the crosshatched area with moderate pressure and pulled off rapidly. Adhesion was scored as the number of squares out of 100 still attached to the substrate.

### Polymer

The fluoropolymer used in the examples was a 52/22/26mol% VF2/HFP/TFE terpolymer. This was compounded with varying amounts of DupontTM DryFilm Dispersions -RA" (E.I. DuPont de Nemours, Wilmington, DE), a TFE telomer having the average molecular weight of 3,000 dispersed in Vertrel® XF solvent. The chemical structure of the Dupont^{™} Dryfilm is (C₂F₄)ₙ, where n is typically 10-500.

### Example of Coating method

Solutions of 2.0 wt% fluoropolymer (52/22/26mol% VF2/HFP/FFE terpolymer) in Vertrel® XF were made by agitating chunks of the polymer with solvent for several days at room temperature. The DryFilm dispersion was added to the solution. The dispersion used was Dupont^{™} DryFilm RA Dispersion (E.I. DuPont de Nemours, Wilmington, DE), a TFE telomer having the average molecular weight of 3,000 dispersed in Vertrel® XF solvent. The chemical structure of the Dryfilm is (C₂F₄)ₙ, where n is typically 10-500.

PMMA and glass plates measuring 2.5 cm by 5.0 cm by 3 mm thick were used for testing. The plates were coated by lowering the plates into the polymer solution at a rate of 300mm/min. and then, 30 seconds later, raising the plates back out of the solution at 225mm/min. After 5-10 minutes air drying, the plates were dried for 10 minutes in an air oven. The temperature was 80 degree C for PMMA, and 300 degree C for glass plates. The results are shown below in Table 1.

**TABLE 1**

| | Comp.1 | Example 1 | Example 2 | Example 3 | Comp. 2 | Comp. 3 |
|---|---|---|---|---|---|---|
| Fluoropolymer : dry-film (weight ratio) | 100:0 | 97:3 | 95:5 | 90:10 | 0:100 | No-coat |
| Transmittance at 500nm wavelength (%) | 98.1 | 96.6 | 93.6 | 90.5 | 69.0 | 92.5 |
| Initial water contact angle (degree) | 101 | 99 | 98 | 99 | 100 | 72 |
| Hardness | 2H | 3H | 5H | 5H | Below 6B | - |
| Abrasion resistance 1 (1kg load) | Scratched | No scratch | No scratch | No scratch | Easily came off | - |
| Water contact angle after abrasion resistance 2 (steel wool, 5 times) | 86 | 92 | 94 | 95 | Easily came off | - |
| Water contact angle after abrasion resistance 2 (steel wool, 20 times) | 65 | 87 | 91 | 89 | Easily came off | - |

Solutions of 2.0 wt% fluoropolymer (52/22/26mol% VF2/HFP/TFE terpolymer) in Vertrel® XF were made by agitating chunks of the polymer with solvent for several days at room temperature. The DryFilm dispersion was added to the solution. The dispersion used was Dupont^{™} DryFilm RA Dispersion (E.I. DuPont de Nemours, Wilmington, DE), a TFE telomer having the average molecular weight of 3,000 dispersed in Vertrel® XF solvent. The chemical structure of the Dryfilm® is (C₂F₄)ₙ, where n is typically 10-500.

PC plates measuring 2.5 cm by 5.0 cm by 3 mm thick were used for testing. The plates were coated by lowering the plates into the polymer solution at a rate of 300mm/min. and then, 30 seconds later, raising the plates back out of the solution at 225mm/min. After 5-10 minutes air drying, the plates were dried for 10 minutes in an air oven at 120°C. The results are shown below in Table 2.

**TABLE 2**

| | Comp. 4 | Example 4 | Example 5 | Example 6 | Comp. 5 | Comp. 6 |
|---|---|---|---|---|---|---|
| Fluoropolymer : dry-film (weight ratio) | 100:0 | 97:3 | 95:5 | 90:10 | 0:100 | No-coat |
| Transmittance at 500nm wavelength (%) | 96.0 | 95.3 | 91.9 | 89.4 | 64.6 | 87.1 |
| Initial water contact angle (degree) | 101 | 100 | 98 | 99 | 102 | 89 |
| Abrasion resistance 1 (1 kg load) | Scratched | No scratch | No scratch | No scratch | Easily came of | - |
| Adhesion | 100 | 100 | 100 | 100 | 100 | 0 |

Solutions of 2.0 wt% fluoropolymer (52/22/26mol% VF2/HFP/TFE terpolymer) in Vertrel® XF were made by agitating chunks of the polymer with solvent for several days at room temperature. The Krytox® dispersion was added to the solution. The dispersion used was Krytox® GPL-104 (E.I. DuPont de Nemours, Wilmington, DE), a telomer of hexafluoropropylene epoxide dispersed in Vertrel® XF solvent. The chemical structure of the Krytox is F-(CF(CF₃)CF₂-CF₂-O)_{n'}-CF₂CF₃, where n' is 2 to 500.

PMMA plates measuring 2.5 cm by 5.0 cm by 3 mm thick were used for testing. The plates were coated by lowering the plates into the polymer solution at a rate of 300mm/min. and then, 30 seconds later, raising the plates back out of the solution at 225mm/min. After 5-10 minutes air drying, the plates were dried for 10 minutes in an air oven at 80°C. The results are shown below in Table 3.

**TABLE 3**

| | Comp.7 | Example 7 | Example 8 | Example 9 | Example 10 |
|---|---|---|---|---|---|
| Fluoropolymer : Krytox (weight ratio) | 100:0 | 90:10 | 80:20 | 70:30 | 60:40 |
| Transmittance at 500nm wavelength (%) | 98.1 | 98.0 | 98.1 | 97.5 | 97.4 |
| Initial water contact angle (degree) | 101 | 113 | 113 | 114 | 113 |
| Abrasion resistance 2 (steel wool, 5 times) | 86 | 106 | 107 | 108 | 108 |
| Abrasion resistance 2 (steel wool, 15 times) | 79 | 96 | 97 | 95 | 100 |
| | Example 9 | Example 10 | Example 11 | Comp. 8 | Comp. 4 |
| Fluoropolymer : krytox (weight ratio) | 50:50 | 40:60 | 20:80 | 0:100 | Non-coat |
| Transmittance at 500nm wavelength (%) | 97.0 | 96.9 | 96.4 | 95.7 | 92.5 |
| Initial water contact angle (degree) | 113 | 112 | 110 | 79 | 72 |
| Abrasion resistance 2 (steel wool, 5 times) | 103 | 103 | 101 | 86 | - |
| Abrasion resistance 2 (steel wool, 15times) | 94 | 87 | 88 | 84 | - |

## Claims

1. A two-layer coating system for coating substrates comprising an upper layer containing a fluorinated telomer and one or more fluorinated copolymers selected from:
a. poly(tetrafluoroethylene/hexafluoropropylene) wherein the molar ratio of hexafluoropropylene to tetrafluoroethylene is from 0.3 to 1.9;
b. vinylidene fluoride/tetrafluoroethylene/hexafluoropropylene terpolymer, wherein the molar ratio of hexafluoropropylene to tetrafluoroethylene is from 0.3 to 1.9 and the concentration of vinylidene fluoride is about 19 mole %; and
c. poly(tetrafluoroethylene/perfluoro-2,2-dimethyldioxole) wherein the concentration of the perfluorodimethyldioxole is from 60 to 90 mole %;
and a lower coating layer comprising one or more selected from:
a. poly(vinylidene fluoride/tetrafluoroethylene/hexafluoropropylene) wherein the ratio of tetrafluoroethylene to hexafluoropropylene is from 0.3 to 1.9 and the concentration of vinylidene fluoride is from 18 to 60 mole % on poly(methyl methacrylate) substrates and from 12 to 40 mole % on polycarbonate, poly(ethylene terephthalate), and polysulfone substrates;
b. poly(vinyl fluoride/tetrafluoroethylene/hexafluoropropylene) wherein the ratio of tetrafluoroethylene to hexafluoropropylene is from 0.9 to 2.1 and the concentration of vinyl fluoride is from 42 to 58 mole %;
c. poly(vinyl acetate/tetrafluoroethylene/hexafluoroisobutylene) wherein the concentration of vinyl acetate is from 36 to 69 mole % and the concentration of hexafluoroisobutylene is from 14 to 52 mole %; and
d. a tetrafluoroethylene/poly(vinyl alcohol) graft comprising about 46 mole percent tetrafluoroethylene.

2. The coating system of Claim 1 wherein the fluorinated telomer is present in an amount of up to 80% by weight.

3. The coating system of Claim 1 wherein the fluorinated telomer comprises tetrafluoroethylene or perfluoroalkylpolyether units.

4. The coating system of Claim 3 wherein the fluorinated telomer has the formula (C₂F₄)ₙ or F-(CFCF₃-CF₂-O)ₙ-CF₂CF₃ where n is 2 to 500, and wherein the fluorinated telomer is optionally end-capped.

5. The coating system of Claim 1 wherein the substrate is selected from poly(methyl methacrylate), polycarbonate, poly(ethylene terephthalate), polysulfone, triacetyl cellulose and glass.

6. A method of increasing the hardness of a two-layer coating system comprising an upper layer containing one or more fluorinated copolymers selected from:
a. poly(tetrafluoroethylene/hexafluoropropylene) wherein the molar ratio of hexafluoropropylene to tetrafluoroethylene is from 0.3 to 1.9;
b. poly(vinylidene fluoride/tetrafluoroethylene/hexafluoropropylene), wherein the molar ratio of hexafluoropropylene to tetrafluoroethylene is from 0.3 to 1.9 and the concentration of vinylidene fluoride is about 19 mole %; and
c. poly(tetrafluoroethylene/perfluoro-2,2-dimethyldioxole) wherein the concentration of the perfluorodimethyldioxole is from 60 to 90 mole %;
and a lower coating layer comprising one or more selected from:
a. poly(vinylidene fluoride/tetrafluoroethylene/hexafluoropropylene) wherein the ratio of tetrafluoroethylene to hexafluoropropylene is from 0.3 to 1.9 and the concentration of vinylidene fluoride is from 18 to 60% when the substrate comprises poly(methyl methacrylate) and from 12 to 40 mole % when the substrate comprises polycarbonate, poly(ethylene terephthalate), or polysulfone;
b. poly(vinyl fluoride/tetrafluoroethylene/hexafluoropropylene) wherein the ratio of tetrafluoroethylene to hexafluoropropylene is from 0.9 to 2.1 and the concentration of vinyl fluoride is from 42 to 58 mole %;
c. poly(vinyl acetate/tetrafluoroethylene/hexafluoroisobutylene) wherein the concentration of vinyl acetate is from 36 to 69 mole % and the concentration of hexafluoroisobutylene is from 14 to 52 mole %; and
d. a tetrafluoroethylene/poly(vinyl alcohol) graft comprising about 46 mole percent tetrafluoroethylene,
said method comprising incorporating a fluorinated telomer into the upper layer.

7. The method of Claim 6 wherein the fluorinated telomer is present in an amount of up to 80% by weight.

8. The method of Claim 6 wherein the fluorinated telomer comprises tetrafluoroethylene or perfluoroalkylpolyether units.

9. The method of Claim 8 wherein the fluorinated telomer has the formula (C₂F₄)ₙ or F-(CFCF₃-CF₂-O)ₙ-CF₂CF₃ where n is 2 to 500, and wherein the fluorinated telomer is optionally end-capped.

10. The method of Claim 6 wherein the substrate is selected from poly(methyl methacrylate), polycarbonate, poly(ethylene terephthalate), polysulfone triacetyl cellulose and glass.

11. A method of coating a substrate, comprising:
a. providing a substrate having a surface;
b. dissolving a fluorinated copolymer in a solvent to form a product;
c. adding to the product a dispersion comprising a fluorinated telomer in a fluorinated solvent to form a mixture; and
d. applying the mixture of step b) to the surface of the substrate to form a coating,
wherein the coating comprises a two-layer system comprising an upper layer containing the fluorinated telomer and a fluorinated copolymer selected from one or more of the group consisting of:
a. poly(tetrafluoroethylene/hexafluoropropylene) and poly(vinylidene fluoride/tetrafluoroethylene/hexafluoropropylene), wherein the molar ratio of hexafluoropropylene to tetrafluoroethylene is between 0.3 and 1.9 and, in the case of the vinylidene fluoride/tetrafluoroethylene/hexafluoropropylene terpolymer, the concentration of vinylidene fluoride is about 19 mole %; and
b. poly(tetrafluoroethylene/perfluoro-2,2-dimethyldioxole) wherein the concentration of the perfluorodimethyldioxole is between 60 and 90 mole %;
and a lower coating layer comprising one or more fluorinated copolymers selected from:
a. poly(vinylidene fluoride/tetrafluoroethylene/hexafluoropropylene) wherein the ratio of tetrafluoroethylene to hexafluoropropylene is between 0.3 and 1.9 and the concentration of vinylidene fluoride is between 18 and 60% on poly(methyl methacrylate) substrates and between 12 and 40 mole % on polycarbonate, poly(ethylene terephthalate), and polysulfone substrates;
b. poly(vinyl fluoride/tetrafluoroethylene/hexafluoropropylene) wherein the ratio of tetrafluoroethylene to hexafluoropropylene is between 0.9 and 2.1 and the concentration of vinyl fluoride is between 42 and 58 mole %;
c. poly(vinyl acetate/tetrafluoroethylene/hexafluoroisobutylene) wherein the concentration of vinyl acetate is between 36 and 69 mole % and the concentration of hexafluoroisobutylene is between 14 and 52 mole %; and
d. a tetrafluoroethylene/poly(vinyl alcohol) graft comprising about 46 mole percent tetrafluoroethylene.

12. The method of Claim 11 wherein the fluorinated telomer is present in an amount of up to 80% by weight.

13. The method of Claim 11 wherein the fluorinated telomer comprises tetrafluoroethylene or perfluoroalkylpolyether units.

14. The method of Claim 13 wherein the fluorinated telomer has the formula (C₂F₄)ₙ or F-(CFCF₃-CF₂-O)ₙ-CF₂CF₃ where n is 2 to 500, and wherein the fluorinated telomer is optionally end-capped.

15. The method of Claim 11 wherein the substrate is selected from the group consisting of poly(methyl methacrylate), polycarbonate, poly(ethylene terephthalate), polysulfone, triacetyl cellulose and glass.

## Patentansprüche

1. Zweilagiges Beschichtungssystem zum Beschichten von Substraten, das aufweist: eine Deckschicht, die ein fluoriertes Telomer und ein oder mehrere fluorierte Copolymere enthält, die unter den folgenden ausgewählt sind:
a. Poly(tetrafluorethylen/hexafluorpropylen), wobei das Molverhältnis von Hexafluorpropylen zu Tetrafluorethylen 0,3 bis 1,9 beträgt;
b. Vinylidenfluorid/Tetrafluorethylen/Hexafluorpropylen-Terpolymer, wobei das Molverhältnis von Hexafluorpropylen zu Tetrafluorethylen 0,3 bis 1,9 und die Konzentration von Vinylidenfluorid etwa 19 Mol-% beträgt; und
c. Poly(tetrafluorethylen/perfluor-2,2-dimethyldioxol), wobei die Konzentration des Perfluordimethyldioxols 60 bis 90 Mol-% beträgt;
und eine untere Beschichtungslage, die eine oder mehrere Komponenten aufweist, die unter den folgenden ausgewählt sind:
a. Poly(vinylidenfluorid/tetrafluorethylen/hexafluorpropylen), wobei das Verhältnis von Tetrafluorethylen zu Hexafluorpropylen 0,3 bis 1,9 und die Konzentration von Vinylidenfluorid auf Poly(methylmethacrylat)-Substraten 18 bis 60 Mol-% und auf Polycarbonat-, Poly(ethylenterephthalat)- und Polysulfon-Substraten 12 bis 40 Mol-% beträgt;
b. Poly(vinylfluorid/tetrafluorethylen/hexafluorpropylen), wobei das Verhältnis von Tetrafluorethylen zu Hexafluorpropylen 0,9 bis 2,1 und die Konzentration von Vinylfluorid 42 bis 58 Mol-% beträgt;
c. Poly(vinylacetat/tetrafluorethylen/hexafluorisobutylen), wobei die Konzentration von Vinylacetat 36 bis 69 Mol-% und die Konzentration von Hexafluorisobutylen 14 bis 52 Mol-% beträgt; und
d. einem Tetrafluorethylen/Poly(vinylalkohol)-Propfen mit etwa 46 Mol-% Tetrafluorethylen.

2. Beschichtungssystem nach Anspruch 1, wobei das fluorierte Telomer in einem Anteil bis zu 80 Gew.-% anwesend ist.

3. Beschichtungssystem nach Anspruch 1, wobei das fluorierte Telomer Tetrafluorethylen- oder Perfluoralkylpolyether-Einheiten aufweist.

4. Beschichtungssystem nach Anspruch 3, wobei das fluorierte Telomer die Formel (C₂F₄)ₙ oder F-(CFCF₃-CF₂-O)ₙ-CF₂CF₃ aufweist, wobei n gleich 2 bis 500 ist, und wobei das fluorierte Telomer wahlweise mit Endgruppen abgeschlossen ist.

5. Beschichtungssystem nach Anspruch 1, wobei das Substrat unter Poly(methylmethacrylat), Polycarbonat, Poly(ethylenterephthalat), Polysulfon, Triacetylcellulose und Glas ausgewählt ist.

6. Verfahren zum Erhöhen der Härte eines zweilagigen Beschichtungssystems, das aufweist: eine Deckschicht, die ein oder mehrere fluorierte Copolymere enthält, die unter den folgenden ausgewählt sind:
a. Poly(tetrafluorethylen/hexafluorpropylen), wobei das Molverhältnis von Hexafluorpropylen zu Tetrafluorethylen.0,3 bis 1,9 beträgt;
b. Poly(vinylidenfluorid/tetrafluorethylen/hexafluorpropylen), wobei das Molverhältnis von Hexafluorpropylen zu Tetrafluorethylen 0,3 bis 1,9 und die Konzentration von Vinylidenfluorid etwa 19 Mol-% beträgt; und
c. Poly(tetrafluorethylen/perfluor-2,2-dimethyldioxol), wobei die Konzentration des Perfluordimethyldioxols 60 bis 90 Mol-% beträgt;
und eine untere Beschichtungslage, die eine oder mehrere Komponenten aufweist, die unter den folgenden ausgewählt sind:
a. Poly(vinylidenfluorid/tetrafluorethylen/hexafluorpropylen), wobei das Verhältnis von Tetrafluorethylen zu Hexafluorpropylen 0,3 bis 1,9 und die Konzentration von Vinylidenfluorid 18 bis 60 Mol-% beträgt, wenn das Substrat Poly(methylmethacrylat) aufweist, und 12 bis 40 Mol-% beträgt, wenn das Substrat Polycarbonat, Poly(ethylenterephthalat) oder Polysulfon aufweist;
b. Poly(vinylfluorid/tetrafluorethylen/hexafluorpropylen), wobei das Verhältnis von Tetrafluorethylen zu Hexafluorpropylen 0,9 bis 2,1 und die Konzentration von Vinylfluorid 42 bis 58 Mol-% beträgt;
c. Poly(vinylacetat/tetrafluorethylen/hexafluorisobutylen), wobei die Konzentration von Vinylacetat 36 bis 69 Mol-% und die Konzentration von Hexafluorisobutylen 14 bis 52 Mol-% beträgt; und
d. einem Tetrafluorethylen/Poly(vinylalkohol)-Propfen mit etwa 46 Mol-% Tetrafluorethylen,
wobei das Verfahren die Einlagerung eines fluorierten Telomers in die Deckschicht aufweist.

7. Beschichtungssystem nach Anspruch 6, wobei das fluorierte Telomer in einem Anteil bis zu 80 Gew.-% anwesend ist.

8. Verfahren nach Anspruch 6, wobei das fluorierte Telomer Tetrafluorethylen- oder Perfluoralkylpolyether-Einheiten aufweist.

9. Verfahren nach Anspruch 8, wobei das fluorierte Telomer die Formel (C₂F₄)ₙ oder F-(CFCF₃-CF₂-O)ₙ-CF₂CF₃ aufweist, wobei n gleich 2 bis 500 ist, und wobei das fluorierte Telomer wahlweise mit Endgruppen abgeschlossen ist.

10. Verfahren nach Anspruch 6, wobei das Substrat unter Poly(methylmethacrylat), Polycarbonat, Poly(ethylenterephthalat), Polysulfon, Triacetylcellulose und Glas ausgewählt ist.

11. Verfahren zum Beschichten eines Substrats, wobei das Verfahren aufweist:
a. Bereitstellen eines Substrats mit einer Oberfläche;
b. Auflösen eines fluorierten Copolymers in einem Lösungsmittel, um ein Produkt zu bilden;
c. Zusetzen einer Dispersion, die ein fluoriertes Telomer in einem fluorierten Lösungsmittel aufweist, zu dem Produkt, um ein Gemisch zu bilden; und
d. Auftragen des Gemischs von Schritt b) auf die Oberfläche des Substrats, um eine Beschichtung zu bilden,
wobei die Beschichtung ein zweilagiges System mit den folgenden Komponenten aufweist: einer Deckschicht, die das fluorierte Telomer und ein fluoriertes Copolymer enthält, das unter einer oder mehreren Komponenten aus der Gruppe ausgewählt ist, die aus den folgenden Verbindungen besteht:
a. Poly(tetrafluorethylen/hexafluorpropylen) und Poly(vinylidenfluorid/tetrafluorethylen/ hexafluorpropylen), wobei das Molverhältnis von Hexafluorpropylen zu Tetrafluorethylen zwischen 0,3 und 1,9 liegt und im Fall von Vinylidenfluorid/Tetrafluorethylen/Hexafluorpropylen-Terpolymer die Konzentration von Vinylidenfluorid etwa 19 Mol-% beträgt; und
b. Poly(tetrafluorethylen/perfluor-2,2-dimethyldioxol), wobei die Konzentration des Perfluordimethyldioxols zwischen 60 und 90 Mol-% liegt;
und einer unteren Beschichtungslage, die eine oder mehrere fluorierte Copolymere aufweist, die unter den folgenden ausgewählt sind:
a. Poly(vinylidenfluorid/tetrafluorethylen/hexafluorpropylen), wobei das Verhältnis von Tetrafluorethylen zu Hexafluorpropylen zwischen 0,3 und 1,9 liegt und die Konzentration von Vinylidenfluorid auf Poly((methylmethacrylat)-Substraten zwischen 18 und 60% und auf Polycarbonat-, Poly(ethylenterephthalat)- und Polysulfon-Substraten zwischen 12 und 40 Mol-% liegt;
b. Poly(vinylfluorid/tetrafluorethylen/hexafluorpropylen), wobei das Verhältnis von Tetrafluorethylen zu Hexafluorpropylen zwischen 0,9 und 2,1 liegt und die Konzentration von Vinylfluorid zwischen 42 und 58 Mol-% liegt;
c. Poly(vinylacetat/tetrafluorethylen/hexafluorisobutylen), wobei die Konzentration von Vinylacetat zwischen 36 und 69 Mol-% und die Konzentration von Hexafluorisobutylen zwischen 14 und 52 Mol-% liegt; und
d. einem Tetrafluorethylen/Poly(vinylalkohol)-Propfen mit etwa 46 Mol-% Tetrafluorethylen.

12. Verfahren nach Anspruch 11, wobei das fluorierte Telomer in einem Anteil bis zu 80 Gew.-% anwesend ist.

13. Verfahren nach Anspruch 11, wobei das fluorierte Telomer Tetrafluorethylen- oder Perfluoralkylpolyether-Einheiten aufweist.

14. Verfahren nach Anspruch 13, wobei das fluorierte Telomer die Formel (C₂F₄)ₙ oder F-(CFCF₃-CF₂-O)ₙ-CF₂CF₃ aufweist, wobei n gleich 2 bis 500 ist, und wobei das fluorierte Telomer wahlweise mit Endgruppen abgeschlossen ist.

15. Verfahren nach Anspruch 11, wobei das Substrat unter Poly(methylmethacrylat), Polycarbonat, Poly(ethylenterephthalat), Polysulfon, Triacetylcellulose und Glas ausgewählt ist.

## Revendications

1. Système de revêtement bicouche pour le revêtement de substrats, comprenant une couche supérieure contenant un télomère fluoré et un ou plusieurs copolymères fluorés choisis parmi :
a. un poly(tétrafluoroéthylène/hexafluoropropylène) dans lequel le rapport molaire de l'hexafluoropropylène au tétrafluoroéthylène est de 0,3 à 1, 9 ;
b. un terpolymère de fluorure de vinylidène, de tétrafluoroéthylène et d'hexafluoropropylène, dans lequel le rapport molaire de l'hexafluoropropylène au tétrafluoroéthylène est de 0,3 à 1,9 et la concentration de fluorure de vinylidène est d'environ 19% en mole ; et
c. un poly(tétrafluoroéthylène/perfluoro-2,2-diméthyldioxole) dans lequel la concentration du perfluorodiméthyldioxole est de 60 à 90% en mole ;
et une couche de revêtement inférieure comprenant un ou plusieurs éléments choisis parmi :
a. un poly(fluorure de vinylidène/tétrafluoroéthylène/hexafluoropropylène) dans lequel le rapport du tétrafluoroéthylène à l'hexafluoropropylène est de 0,3 à 1,9 et la concentration de fluorure de vinylidène est de 18 à 60% en mole sur des substrats de poly(méthacrylate de méthyle) et de 12 à 40% en mole sur des substrats de polycarbonate, de poly(téréphtalate d'éthylène) et de polysulfone ;
b. un poly(fluorure de vinyle/tétrafluoroéthylène/hexafluoropropylène) dans lequel le rapport du tétrafluoroéthylène à l'hexafluoropropylène est de 0,9 à 2,1 et la concentration de fluorure de vinyle est de 42 à 58% en mole ;
c. un poly(acétate de vinyle/tétrafluoroéthylène/hexafluoroisobutylène) dans lequel la concentration d'acétate de vinyle est de 36 à 69% en mole et la concentration d'hexafluoroisobutylène est de 14 à 52% en mole ; et
d. un tétrafluoroéthylène/poly(alcool de vinyle) greffé comprenant environ 46% en mole de tétrafluoroéthylène.

2. Système de revêtement selon la revendication 1, dans lequel le télomère fluoré est présent dans une quantité allant jusqu'à 80% en poids.

3. Système de revêtement selon la revendication 1, dans lequel le télomère fluoré comprend des unités tétrafluoroéthylène ou polyéther perfluoroalkyle.

4. Système de revêtement selon la revendication 1, dans lequel le télomère fluoré a la formule (C₂F₄)ₙ ou F-(CFCF₃₋CF₂-O)ₙ-CF₂CF₃ où n est de 2 à 500, et dans lequel le télomère fluoré est éventuellement coiffé en extrémité.

5. Système de revêtement selon la revendication 1, dans lequel le substrat est choisi parmi le poly(méthacrylate de méthyle), le polycarbonate, le poly(téréphtalate d'éthylène), le polysulfone, la cellulose triacétylique et le verre.

6. Procédé pour augmenter la dureté d'un système de revêtement bicouche comprenant une couche supérieure contenant un ou plusieurs copolymères fluorés choisis parmi :
a. un poly(tétrafluoroéthylène/hexafluoropropylène) dans lequel le rapport molaire de l'hexafluoropropylène au tétrafluoroéthylène est de 0,3 à 1, 9 ;
b. un poly(fluorure de vinylidène/tétrafluoroéthylène/hexafluoropropylène), dans lequel le rapport molaire de l'hexafluoropropylène au tétrafluoroéthylène est de 0,3 à 1,9 et la concentration de fluorure de vinylidène est d'environ 19% en mole ; et
c. un poly(tétrafluoroéthylène/perfluoro-2,2-diméthyldioxole) dans lequel la concentration du perfluorodiméthyldioxole est d'environ 60 à 90% en mole ;
et une couche de revêtement inférieure comprenant un ou plusieurs éléments choisis parmi :
a. un poly(fluorure de vinylidène/tétrafluoroéthylène/hexafluoropropylène) dans lequel le rapport du tétrafluoroéthylène à l'hexafluoropropylène est de 0,3 à 1,9 et la concentration de fluorure de vinylidène est de 18 à 60% lorsque le substrat comprend du poly(méthacrylate de méthyle) et de 12 à 40% en mole lorsque le substrat comprend du polycarbonate, du poly(téréphtalate d'éthylène) ou du polysulfone ;
b. un poly(fluorure de vinyle/tétrafluoroéthylène/hexafluoropropylène) dans lequel le rapport du tétrafluoroéthylène à l'hexafluoropropylène est de 0,9 à 2,1 et la concentration de fluorure de vinyle est de 42 à 58% en mole ;
c. un poly(acétate de vinyle/tétrafluoroéthylène/hexafluoroisobutylène) dans lequel la concentration d'acétate de vinyle est de 36 à 69% en mole et la concentration d'hexafluoroisobutylène est de 14 à 52% en mole ; et
d. un tétrafluoroéthylène/poly(alcool de vinyle) greffé comprenant environ 46% en mole de tétrafluoroéthylène,
ledit procédé comprenant l'incorporation d'un télomère fluoré dans la couche supérieure.

7. Procédé selon la revendication 6, dans lequel le télomère fluoré est présent dans une quantité allant jusqu'à 80% en poids.

8. Procédé selon la revendication 6, dans lequel le télomère fluoré comprend des unités tétrafluoroéthylène ou polyéther perfluoroalkyle.

9. Procédé selon la revendication 8, dans lequel le télomère fluoré a la formule (C₂F₄)ₙ ou F-(CFCF₃-CF₂-O)ₙ-CF₂CF₃ où n est de 2 à 500, et dans lequel le télomère fluoré est éventuellement coiffé en extrémité.

10. Procédé selon la revendication 6, dans lequel le substrat est choisi parmi le poly(méthacrylate de méthyle), le polycarbonate, le poly(téréphtalate d'éthylène), le polysulfone, la cellulose triacétylique et le verre.

11. Procédé de revêtement d'un substrat, comprenant les étapes consistant à :
a. fournir un substrat ayant une surface ;
b. dissoudre un copolymère fluoré dans un solvant pour former un produit ;
c. ajouter au produit une dispersion comprenant un télomère fluoré dans un solvant fluoré pour former un mélange ; et
d. appliquer le mélange de l'étape b) à la surface du substrat pour former un revêtement,
dans lequel le revêtement comprend un système bicouche comportant une couche supérieure contenant le télomère fluoré et un copolymère fluoré choisi parmi un ou plusieurs éléments du groupe consistant en :
a. un poly(tétrafluoroéthylène/hexafluoropropylène) et un poly(fluorure de vinylidène/tétrafluoroéthylène/hexafluoropropylène), dans lesquels le rapport molaire de l'hexafluoropropylène au tétrafluoroéthylène est entre 0,3 et 1,9 et, dans le cas du terpolymère de fluorure de vinylidène, de tétrafluoroéthylène et d'hexafluoropropylène, la concentration de fluorure de vinylidène est d'environ 19% en mole ; et ;
b. un poly(tétrafluoroéthylène/perfluoro-2,2-diméthyldioxole) dans lequel la concentration du perfluorodiméthyldioxole est entre 60 et 90% en mole ;
et une couche de revêtement inférieure comprenant un ou plusieurs copolymères fluorés choisis parmi :
a. un poly(fluorure de vinylidène/tétrafluoroéthylène/hexafluoropropylène) dans lequel le rapport du tétrafluoroéthylène à l'hexafluoropropylène est entre 0,3 et 1,9 et la concentration de fluorure de vinylidène est entre 18 et 60% sur des substrats de poly(méthacrylate de méthyle) et entre 12 et 40% en mole sur des substrats de polycarbonate, de poly(téréphtalate d'éthylène) et de polysulfone ;
b. un poly(fluorure de vinyle/tétrafluoroéthylène/hexafluoropropylène) dans lequel le rapport du tétrafluoroéthylène à l'hexafluoropropylène est entre 0,9 et 2,1 et la concentration de fluorure de vinyle est entre 42 et 58% en mole ;
c. un poly(acétate de vinyle/tétrafluoroéthylène/hexafluoroisobutylène) dans lequel la concentration d'acétate de vinyle est entre 36 et 69% en mole et la concentration d'hexafluoroisobutylène est entre 14 et 52% en mole ; et
d. un tétrafluoroéthylène/poly(alcool de vinyle) greffé comprenant environ 46% en mole de tétrafluoroéthylène.

12. Procédé selon la revendication 11, dans lequel le télomère fluoré est présent dans une quantité allant jusqu'à 80% en poids.

13. Procédé selon la revendication 11, dans lequel le télomère fluoré comprend des unités tétrafluoroéthylène ou polyéther perfluoroalkyle.

14. Procédé selon la revendication 13, dans lequel le télomère fluoré a la formule (C₂F₄)ₙ ou F-(CFCF₃-CF₂-O)ₙ-CF₂CF₃ où n est de 2' à 500, et dans lequel le télomère fluoré est éventuellement coiffé en extrémité.

15. Procédé selon la revendication 11, dans lequel le substrat est choisi dans le groupe composé du poly(méthacrylate de méthyle), du polycarbonate, du poly(téréphtalate d'éthylène), du polysulfone, de la cellulose triacétylique et du verre.
